# DEMANDE DE BREVET EUROPEEN

(11) **EP 1 433 813 A1**
(43) Date de publication de la demande: **30.06.2004**
(21) Numéro de dépôt: 03293105.7
(22) Date de dépôt: 11.12.2003
(51) Int. Cl.: C08L 27/16, C08K 5/34, C08K 5/3415

(54) **Composition à base de PVDF hétérogène et de bisimide aromatique réticulable par des radiations ionisantes**

(30) Priorité: 24.12.2002 FR 0216606
(71) Demandeur: Atofina, 92800 Puteaux (FR)
(72) Inventeur: Pascal, Thierry, 69390 Charly (FR); Maazouz, Abderrahim, 69100 Villeurbanne (FR)
(74) Mandataire: Neel, Henry

(57) **Abrégé**

La présente invention concerne une composition à base de PVDF hétérogène et de bisimide aromatique réticulable par des radiations ionisantes dans laquelle le PVDF hétérogène est un copolymère du fluorure de vinilydène (VDF) et d'un comonomere, le dit PVDF hétérogène comprenant :
- un ou plusieurs domaines discrets en copolymère VDF-comonomère,
- un ou plusieurs domaines discrets en PVDF homopolymère contenant au moins 50% du VDF du PVDF hétérogène,
- la proportion du comonomère étant entre 1 et 20% en poids du PVDF hétérogène.

Avantageusement le comonomère du VDF dans le PVDF hétérogène est l'hexafluoropropène (HFP).

## Description

### [Domaine de l'invention]

La présente invention concerne une composition à base de PVDF (polyfluorure de vinylidène) hétérogène et de bisimide aromatique réticulable par des radiations ionisantes.

Les polymères à base de fluorure de vinylidène (VDF) sont connus pour offrir d'excellentes propriétés mécaniques, une très grande inertie chimique, ainsi qu'une bonne résistance au feu et au vieillissement. Ces qualités sont exploitées dans des domaines d'application variés. On citera, par exemple, la fabrication de pièces extrudées, injectées ou moulées sous pression pour l'industrie du génie chimique ou de la microélectronique, l'utilisation sous forme de gaine d'étanchéité pour le transport des gaz ou des hydrocarbures, et la réalisation de couche de revêtement pour le câblage électrique dans l'industrie automobile.

Le PVDF hétérogène utilisé dans la présente invention peut être de façon très schématique représenté par une matrice de PVDF homopolymère dans laquelle sont dispersés des copolymères de VDF et d'un comonomère. Ainsi ce PVDF hétérogène est beaucoup plus souple qu'un PVDF homopolymère mais sa température de fusion est celle du PVDF homopolymère. On l'appelle hétérogène par opposition à un copolymère VDF-comonomère dont toutes les chaînes contiennent du VDF et du comonomère et qui est donc homogène. Par contre ce copolymère (homogène) qui est aussi beaucoup plus souple qu'un PVDF homopolymère a une température de fusion plus basse que celle d'un PVDF homopolymère.

### [L'art antérieur et le problème technique]

Dans certain cas, il apparaît que le niveau de performances mécaniques des matériaux précédents est insuffisant, par exemple en termes de module élastique, de contrainte au seuil de plasticité, ou de déformation à la rupture en traction ou en flexion. Cette limitation concerne aussi bien le comportement mécanique à température ambiante que celui observable dans un domaine de température plus élevé, typiquement situé au dessus de 150°C.

Dans des conditions extrêmes d'application ou des usages bien spécifiques, l'obtention d'une cohésion mécanique, caractérisée par exemple par une absence d'écoulement à des températures supérieures au point de fusion du polymère fluoré originel, pourra être exigée. C'est le cas de l'application câble automobile qui réclame la conservation d'une stabilité dimensionnelle jusqu'à 200°C pour la spécification T5, soit plus de 30°C au dessus de la température de fusion du polymère vierge. Cette propriété peut être caractérisée par l'existence d'un plateau caoutchoutique dans l'état fondu, qui sera associé à une valeur de module élastique typiquement supérieure à 10⁵ Pa.

De plus, même si le niveau initial de performances mécaniques s'avère satisfaisant, la stabilité thermique du produit peut constituer le facteur limitant pour l'application. En effet, pour la majorité des usages cités plus haut, le produit va séjourner à des températures élevées, généralement au delà de 130°C, pendant des centaines, voire des milliers d'heures, par exemple au contact direct de l'air ambiant. Ce défaut de stabilité thermique se traduit par une perte progressive des propriétés d'usage. Sur le plan des performances mécaniques, c'est par exemple, le module élastique et la déformation à la rupture qui sont altérés. Il faut ajouter que la perte de poids qui accompagne la dégradation thermique est un élément déterminant, et ceci parce qu'il conditionne l'évolution des caractéristiques dimensionnelles de la pièce finie, et parce qu'il produit des variations locales de densité susceptibles de jouer le rôle d'amorces de rupture.

Dans le cas particulier de l'application câble, la spécification T5 impose les conditions de vieillissement thermique suivantes : 200°C pendant 245 heures, et 175°C pendant 3000 heures. Le principe du test standard consiste à enrouler le cable sur un cylindre de diamètre bien défini avant d'appliquer le traitement thermique. Le critère d'acceptation correspond à la possibilité de dérouler le cable vieilli sans rupture ou fissuration de la couche de polymère. Pour simuler les conditions du test, nous avons pris en compte à la fois l'évolution des propriétés de traction et la perte de poids du matériau.

La demande de brevet **WO 9925747** décrit un procédé pour élever les performances mécaniques du PVDF qui consiste à introduire des additifs thermodurcissables (bismaléimides ou bisnadimides). Par définition, la réticulation de l'additif est conduite en portant la composition à haute température, typiquement au dessus de 200°C. Les principaux défauts de cette démarche sont l'absence de réaction de co-réticulation entre la matrice thermoplastique et l'additif, ainsi que la difficulté de controle de la morphologie finale. La nécessité d'utiliser des traitements thermiques prolongés pour conduire l'étape de réticulation est également un inconvénient pour le procédé. De plus cette demande ne décrit que des PVDF homopolymères ou copolymères et ne concerne pas les PVDF hétérogènes.

Le brevet **US 6156847** décrit des PVDF hétérogènes à base de copolymères du VDF et du CTFE (chlorotrifluoroethylène) dans lesquels on ajoute des dérivés allyliques, tels que le triallyl isocyanurate (TAIC) ou le triallyl cyanurate (TAC) et des dérivés bismaleimide, tels que le N,N' éthylène bismaléimide. Puis la composition obtenue est mise en forme et l'objet obtenu est réticulé par des rayonnements ionisants. Dans la description les bismaleimides aromatiques ne sont pas cités, seul le N,N' éthylène bismaléimide est cité, les exemples n'utilisent que le TAIC.

La demande de brevet japonais **JP 61-307388 A** publiée le 2 juillet 1988 décrit l'association du PVDF et des bis-maleimides aromatiques pour réaliser des couches réticulables sous irradiation. Dans cette demande il n'est pas fait mention des copolymères hétérogènes à base de VDF.

Le brevet **US 3580829** décrit des compositions similaires aux précédentes.

La demande de brevet **US 2001-0023776 A1** décrit l'utilisation des copolymères fluorés hétérogènes VDF-HFP dans les formulations pour l'application cable automobile (improprement désignés par " block copolymer "). Le TAIC et le TAC sont les seuls additifs radioréticulables cités et aucune référence à un gain possible en stabilité thermique lié à une structure chimique d'additif particulière n'est citée. Cette formulation permet de satisfaire la spécification T4 (245 heures à 175°C / 3000 heures à 150°C) , mais ne convient pas pour la spécification T5.

Les compositions de la présente invention à base de polymères fluorés hétérogènes et de bisimides aromatiques, réticulables sous l'effet de radiations ionisantes, présentent une stabilité thermique améliorée dans des conditions de vieillissement type T5 (200°C pendant 245 heures, 3000 heures à 175°C). Elles sont particulièrement utiles pour la fabrication de la couche d'isolation secondaire des câbles à usage automobile.

### [Brève description de l'invention]

La présente invention concerne une composition à base de PVDF hétérogène et de bisimide aromatique réticulable par des radiations ionisantes dans laquelle le PVDF hétérogène est un copolymère du fluorure de vinilydène (VDF) et d'un comonomere, le dit PVDF hétérogène comprenant :
- un ou plusieurs domaines discrets en copolymère VDF-comonomère,
- un ou plusieurs domaines discrets en PVDF homopolymère contenant au moins 50% du VDF du PVDF hétérogène,
- la proportion du comonomère étant entre 1 et 20% en poids du PVDF hétérogène.

Avantageusement le comonomère du VDF dans le PVDF hétérogène est l'hexafluoropropène (HFP).

### [Description détaillée de l'invention]

**S'agissant du PVDF hétérogène** et d'abord de son comomère il peut être choisi parmi le CTFE et l'HFP. La proportion de comonomère peut être comprise entre 1 et 20% en poids du PVDF hétérogène avantageusement entre 1 et 15% et de préférence entre 5 et 15%. La température de fusion du PVDF hétérogène est avantageusement comprise entre 160 et 170°C et de préférence entre 163 et 168°C. Avantageusement le PVDF hétérogène peut comprendre un autre comonomère en plus du CTFE ou de l'HFP et choisi parmi les monomères copolymérisables avec le VDF. A titre d'exemple on peut citer le CTFE ou l'HFP (si le PVDF hétérogène contient déjà de l'HFP ou du CTFE), le tetrafluoroéthylène, le trifluoroethylène, le fluorure de vinyle et le pentafluoropropène.

De tels PVDF hétérogènes sont décrits dans le brevet EP 280591 (comonomère CTFE) et dans les brevets US 5093427 et US 6187885 (comonomère HFP). Avantageusement le PVDF hétérogène est celui dont le comonomère est l'HFP.

**S'agissant du bisimide aromatique** on peut citer à titre d'exemple les bis maléimides et les bis nadimides. Les bisimides aromatiques peuvent être définis comme les produits de réaction de deux moles d'anhydride d'acide dicarboxylique insaturé avec une diamine aromatique. Avantageusement ce sont les produits de formules (1) et (2) suivantes: 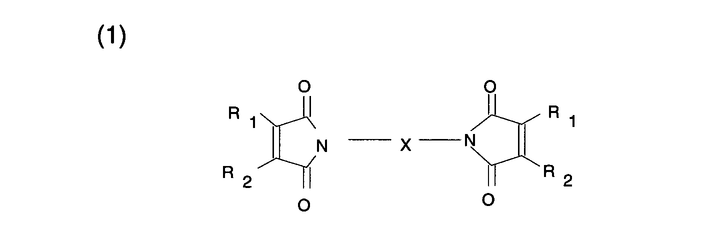 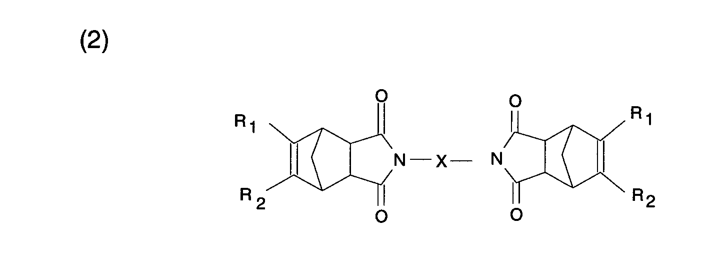 dans lesquelles R₁ et R₂ signifient indépendamment l'un de l'autre, l'hydrogène ou un reste alkyle en C₁-C₂₄ linéaire ou ramifié, un reste cycloalkyle en C₅-C₁₂, aryle en C₆-C₂₄, hétéroaryle en C₄-C₂₄, aralkyle en C₇-C₂₄, alkaryle en C₇-C₂₄ ;
en particulier l'hydrogène ou un reste alkyle en C₁-C₁₈ linéaire ou ramifié, un reste cycloalkyle en C₅-C₈, aryle en C₆-C₁₈, hétéroaryle en C₄-C₁₈, aralkyle en C₇-C₁₈, alkaryle en C₇-C₁₈ ;
de préférence l'hydrogène ou un reste alkyle en C₁-C₁₂ linéaire ou ramifié, un reste cycloalkyle en C₅-C₈, aryle en C₆-C₁₈, aralkyle en C₇-C₁₈ ou alkaryle en C₇-C₁₈ ;
spécialement l'hydrogène ou un reste alkyle en C₁-C₁₂ linéaire ou ramifié, un reste cyclohexyle, phényle, biphényle, aralkyle en C₇-C₁₂ ou alkaryle en C₇-C₁₂,
dans lesquelles X signifie un reste arylène en C₆-C₂₄, hétéroarylène en C₄-C₂₄, aralkylène en C₇-C₂₄, ou alkarylène en C₇-C₂₄ ;
en particulier un reste arylène en C₆-C₁₈, hétéroarylène en C₄-C₂₈, aralkylène en C₇-C₁₈ ou alkarylène en C₇-C₁₈ ;
de préférence un reste arylène en C₆-C₁₈, hétéroarylène en C₄-C₁₂, aralkylène en C₇-C₁₈ ou alkarylène en C₇-C₁₈ ;
spécialement un reste phénylène, biphénylène, aralkylène en C₇-C₁₂ ou alkarylène en C₇-C₁₂.

Avantageusement X est le produit de formule (3) suivante:

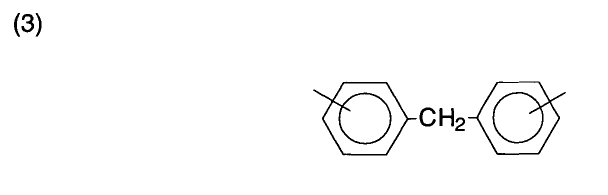

De préférence le bisimide est le bis-maléimide de la méthylène dianiline (BMI-MDA).

Les bisimides utilisés dans la présente invention peuvent être obtenus en faisant réagir une diamine primaire H₂N-X-NH₂ avec un anhydride de formules (4) ou (5) suivantes : 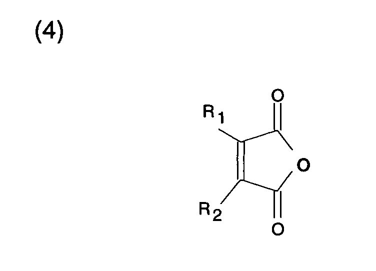 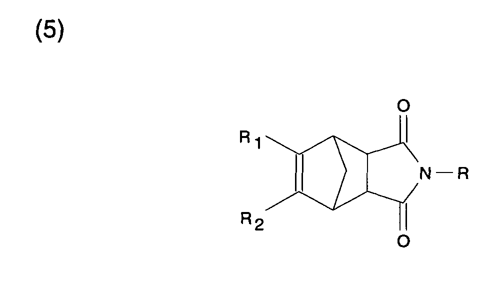 R₁, R₂ et X ayant les significations ci-dessus. On obtient généralement un composé intermédiaire qui contient des groupes amide - acide ou bien orthoamide - acide et qui conduit au composé imide par une deshydratation réalisée par voie chimique ou par voie thermique.

De nombreux bismaléimides dans lesquels R₁ = R₂ = H, ont été décrits dans l'ouvrage : "High-Performance Thermosets" de Shiow-Ching Lin et Eli M. Pearce, Hanser Publishers, pp 13-29, 1994.

**S'agissant des proportions de PVDF hétérogène et de bisimide** elles peuvent varier dans une large plage. Avantageusement les proportions de bisimide sont de 0,1 à 10% en poids pour respectivement 99,9 à 90% de PVDF hétérogène. De préférence les proportions de bisimide sont de 1 à 5% en poids pour respectivement 99 à 95% de PVDF hétérogène.

Outre les résines fluorées et les composés imides, les compositions selon l'invention peuvent également contenir divers additifs et/ou charges et/ou colorants et/ou pigments, organiques ou minéraux, macromoléculaires ou non, bien connus dans la littérature.

A titre d'exemples non limitatifs de charges, on peut citer le mica, l'alumine, le talc, le noir de carbone, les fibres de verre, de carbone, des composés macromoléculaires.

A titre d'exemples non limitatifs d'additifs, on peut citer les agents anti-U.V., les agents ignifugeants, les agents de transformation ou processing aids.

La somme de ces additifs et charges divers représente en général moins de 20 % du poids total de la composition à laquelle ils sont incorporés.

Les compositions selon l'invention peuvent être préparées par mélange à l'état fondu des résines fluorées et des composés imides -initialement sous forme de poudres, de granulés, de solutions- dans une extrudeuse, un mélangeur à cylindres ou tout type d'appareil de mélange adapté.

Il est également possible de mélanger une solution ou un latex de résines fluorées, avec les composés imides sous forme de poudre ou de solution.

Les additifs éventuels peuvent être incorporés dans les compositions, soit lors du mélange des résines fluorées et des additifs imides, soit préalablement à cette étape par mélange avec l'un ou l'autre des constituants, soit postérieurement à cette étape selon les techniques énoncées plus haut.

Les compositions selon l'invention peuvent être utilisées pour la réalisation d'articles, tels que tuyaux, récipients creux, plaques, laminés, mono- ou mufti-matériaux destinés au transport et/ou stockage de fluides chauds notamment d'hydrocarbures éventuellement sous pression dans le domaine pétrolier offshore et on shore, dans le domaine du génie chimique pour des pièces au contact de fluides corrosifs et/ou abrasifs ainsi que pour la réalisation de cheminées et conduits de cheminée de chaudières.

Elles peuvent également être utilisées pour la réalisation de matériaux multicouches sous forme de plaques, de films, etc. préparés par exemple par coextrusion, plaxage ou collage en solution ou bien comme revêtement de substrats divers (à base de résines, métaux, bois et/ou stratifiés ou laminés) préparés par exemple par enduction, couchage ou par coulée. Ces matériaux peuvent être avantageusement utilisés dans le domaine de la construction et du bâtiment ; à titre d'exemple, on peut citer des plaques coextrudées pour le bardage, des câbles ou des haubans de pont protégés par une couche externe à base d'une composition selon l'invention.

Ils peuvent être avantageusement utilisés dans le domaine des pièces de carrosserie pour véhicules, notamment automobiles, pour des appareils d'électroménager, etc. ; à titre d'exemple on peut citer des pièces en ABS recouvertes d'un film à base d'une composition selon l'invention.

Les compositions selon l'invention peuvent être avantageusement utilisées pour la fabrication de couches d'isolation thermique ou mécanique pour les câbles conducteurs d'électricité employés dans les applications électrotechniques ou automobiles ; à titre d'exemple, on peut citer la protection externe de câbles à âme de cuivre utilisés dans l'équipement des moteurs thermiques.

Les objets fabriqués avec les compositions de l'invention sont ensuite soumis à un rayonnement ionisant sous une intensité et un temps suffisants pour provoquer la réticulation. Ces techniques sont connues en elles mêmes et correspondent, à l'échelle industrielle, à une exposition sous un rayonnement Bêta (faisceau d'électrons) ou Gamma. Les réactions mises en jeux par le rayonnement ionisant dépendent étroitement de la dose d'irradiation appliquée à la composition. L'obtention d'une réticulation commune entre le bisimide et le polymère fluoré conduit généralement à l'amélioration des propriétés mécaniques et de la stabilité thermique.

### [Exemples]

L'amélioration de la stabilité thermique a été mise en évidence par l'intermédiaire d'une comparaison entre des compositions contenant du Kynarflex® 3120-50 et du BMI-MDA et des compositions contenant du Kynarflex® 3120-50 et du TAIC.

Le Kynarflex® 3120-50 est un PVDF hétérogène VDF-HFP de MFI (abréviation de Melt Flow Index) ou indice de fluidité à l'état fondu en volume 0,5 g/10 min à 230°C sous une charge de 5 kg.

Les formulations contenant le BMI-MDA et le TAIC ont été préparées par malaxage à l'état fondu dans une extrudeuse bivis Clextral® BC 21.

A partir de la formulation sous forme de granulés, différents types d'éprouvettes ont été fabriquées, soit par moulage en injection, soit par moulage en compression. Ces éprouvettes ont été traitées par rayonnement Beta à une dose de 100 kGy avant évaluation mécanique.

Les propriétés mécaniques intiales sont déterminées à partir des données suivantes :
- Température de déflection sous charge (HDT) sur éprouvettes injectées de 4 mm d'épaisseur suivant la norme ISO 75.
- Analyse mécanique dynamique (DMA) sous une fréquence de 1 Hz en mode traction sur éprouvette pressée de 1 mm d'épaisseur. La valeur du module de conservation E' a été retenue comme donnée significative.

L'évaluation de la stabilité thermique repose sur la détermination des propriétés mécaniques en traction d'éprouvettes pressées de 0.4 mm d'épaisseur suivant la norme ISO 527. La mesure a été réalisée avant et après traitement en étuve à 200°C pendant 245 heures. La perte de poids des échantillons en cours de vieillissement thermique a parallèlement été mesurée.

L'ensemble des résultats obtenus est reporté dans le tableau ci-dessous.

A l'examen du tableau, on constate une conservation des caractéristiques mécaniques et une perte de poids minimum pour la composition contenant le BMI-MDA.

| **COMPOSITIONS IRRADIEES A 100kGy: PROPRIETES MECANIQUES ET STABILITE THERMIQUE** | | | | | |
|---|---|---|---|---|---|
| | | Kynar 3120-50 | Kynar 3120-50+ TAIC (5%pds) | Kynar 3120-50+ BMI-MDA (3%pds) | Kynar 3120-50+ BMI-MDA (5%pds) |
| | Echantillon | | | | |
| **HDT (°C)** | initial | 48 | 54.2 | 50.6 | 53.8 |
| **DMA** | | | | | |
| E' à 0°C (Pa) | initial | 1.47E+09 | 1.97E+09 | 1.57E+09 | |
| E' à 100°C (Pa) | initial | 2.10E+08 | 2.81E+08 | 2.09E+08 | |
| E' à 200°C (Pa) | initial | 1.00E+04 | 2.50E+06 | 6.28E+05 | |
| **TRACTION** | | | | | |
| Containte au seuil (MPa) | initial | 29 | 33 | 30 | 32 |
| | vieilli* | 27 | 27 | 27.5 | 30.5 |
| Déformation au seuil (%) | initial | 13.3 | 9.6 | 12.1 | 10.5 |
| | vieilli* | 17 | 15 | 12.9 | 10.9 |
| Déformation rupture (%) | initial | 435 | 214 | 300 | 242 |
| | vieilli* | 411 | 265 | 302 | 235 |
| Module vieilli*/Module initial | | 0.75 | 0.62 | 0.89 | 0.92 |
| **PERTE DE POIDS (%)*** | | 0.61 | 2.17 | 0.6 | 0.78 |

| | | | | | |
|---|---|---|---|---|---|
| *: conditions de vieillissement thermique: 200°C pendant 245 heures | | | | | |

## Revendications

1. Composition à base de PVDF hétérogène et de bisimide aromatique réticulable par des radiations ionisantes dans laquelle le PVDF hétérogène est un copolymère du fluorure de vinilydène (VDF) et d'un comonomere, le dit PVDF hétérogène comprenant :
• un ou plusieurs domaines discrets en copolymère VDF-comonomère,
• un ou plusieurs domaines discrets en PVDF homopolymère contenant au moins 50% du VDF du PVDF hétérogène,
• la proportion du comonomère étant entre 1 et 20% en poids du PVDF hétérogène.

2. Composition selon la revendication 1 dans laquelle la proportion de comonomère du PVDF hétérogène est comprise entre 1 et 15% en poids du PVDF hétérogène.

3. Composition selon la revendication 2 dans laquelle la proportion de comonomère du PVDF hétérogène est comprise entre 5 et 15% en poids du PVDF hétérogène.

4. Composition selon l'une quelconque des revendications précédentes dans laquelle la température de fusion du PVDF hétérogène est comprise entre 160 et 170°C.

5. Composition selon la revendication 4 dans laquelle la température de fusion du PVDF hétérogène est comprise entre 163 et 168°C.

6. Composition selon l'une quelconque des revendications précédentes dans laquelle le comonomère du VDF dans le PVDF hétérogène est l'hexafluoropropène (HFP).

7. Composition selon l'une quelconque des revendications précédentes dans laquelle les proportions de bisimide sont de 0,1 à 10% en poids pour respectivement 99,9 à 90% de PVDF hétérogène.

8. Composition selon la revendication 7 dans laquelle les proportions de bisimide sont de 1 à 5% en poids pour respectivement 99 à 95% de PVDF hétérogène.

9. Composition selon l'une quelconque des revendications précédentes dans laquelle le bisimide est le bis-maléimide de la méthylène dianiline (BMI-MDA).
